Europäisches Patentamt

European Patent Office

Office européen des brevets

(19)

(11) Veröffentlichungsnummer : **0 386 036 B1**

(12) **EUROPÄISCHE PATENTSCHRIFT**

(45) Veröffentlichungstag der Patentschrift :
**30.12.92 Patentblatt 92/53**

(51) Int. Cl.⁵ : **B60T 8/88,** B60T 17/22

(21) Anmeldenummer : **88909087.4**

(22) Anmeldetag : **05.10.88**

(86) Internationale Anmeldenummer :
**PCT/EP88/00891**

(87) Internationale Veröffentlichungsnummer :
**WO 89/04268 18.05.89 Gazette 89/11**

(54) **ANORDNUNG ZUR ÜBERWACHUNG DER FUNKTION DES BREMSLICHTSCHALTERS EINES FAHRZEUGS.**

(30) Priorität : **06.11.87 DE 3737688**

(43) Veröffentlichungstag der Anmeldung :
**12.09.90 Patentblatt 90/37**

(45) Bekanntmachung des Hinweises auf die
Patenterteilung :
**30.12.92 Patentblatt 92/53**

(84) Benannte Vertragsstaaten :
**AT DE FR GB SE**

(56) Entgegenhaltungen :
**DE-A- 2 331 484**
**US-A- 3 516 058**

(56) Entgegenhaltungen :
**Autombiltechnische ZEITSCHRIFT; Band 88,**
**Nr. 5, Mai 1986 (Stuttgart, DE) H. Gaus et al.:**
**"ASD, ASR und 4Matic: Drei Systemeim**
**"Konzept Aktive Sicherheit" von Daimler-**
**Benz - Teil 1, Seiten 273-274, 277-278, 281, 284**

(73) Patentinhaber : **ROBERT BOSCH GMBH**
**Postfach 30 02 20**
**W-7000 Stuttgart 30 (DE)**

(72) Erfinder : **FRANZKE, Knut**
**Scheerwiesenweg 57**
**W-7141 Schwieberdingen (DE)**

(74) Vertreter : **Kammer, Arno, Dipl.-Ing.**
**ROBERT BOSCH GmbH Zentralabteilung**
**Patente Postfach 30 02 20**
**W-7000 Stuttgart 30 (DE)**

## Beschreibung

### Stand der Technik

Bremslichtschalter werden bei Bremsbetätigung betätigt und geben dann ein Signal ab, mit dem das Bremslicht aktiviert wird. Bei Vorhandensein z. B. eines Antiblockierreglers, und/oder eines Antriebsschlupfreglers und/oder eines Motorschleppmoment reglers wird dieses Signal jedoch auch dem Steuergerät des Reglers zugeführt und dort bei der Regelung mitbenutzt (z.B. DE-B-22 53 867). So kann das Vorhandensein dieses Signals z.B. als Voraussetzung für das Einsetzen einer ABS-Regelung oder für das Unterbrechen einer ASR-Regelung dienen.

Es ist deshalb bei Einbeziehung dieses Signals in die Regelung von besonderem Interesse auch festzustellen, ob der Bremslichtschalter funktionsfähig ist, oder durch Kurzschluß oder Leitungsbruch nicht funktioniert.

### Vorteile der Erfindung

Die Überwachung des Bremslichtschalters gemäß den Patentansprüchen 1 und 2 stellt sicher, daß sowohl der Kurzschluß als auch der Leitungsbruch festgestellt wird und eine Fehleranzeige erfolgt. Dies kann durch Einschalten einer Warnlampe und/oder durch Setzen eines Fehlerspeichers erfolgen, so daß auch bei Verschwinden des Fehlers die Tatsache, daß ein Fehler aufgetreten war, festgehalten bleibt.

Vorzugsweise werden beide Überwachungen parallel angewendet. Die zu dem Steuergerät führende Signalleitung wird dabei mitüberwacht. Vorzugsweise werden die Schaltungen im Steuergerät integriert und es werden Speicher des Steuergeräts genutzt. Man kann bei Verwendung einer solchen Überwachung das Bremslichtschaltersignal nun auch stärker in die Regelung einbeziehen.

Bei Fahrzeugen mit Automatikgetriebe, bei denen der Fahrer auch beim Anlassen des Fahrzeugs den Fuß meist auf dem Bremspedal ruhen läßt, ist es vorteilhaft einen Häufigkeitsschalter vorzusehen, um erst nach einer vorgegebenen Zahl (z.B. 3) von Fehlererkennungen die Fehleranzeige zu setzen

### Figurenbeschreibung

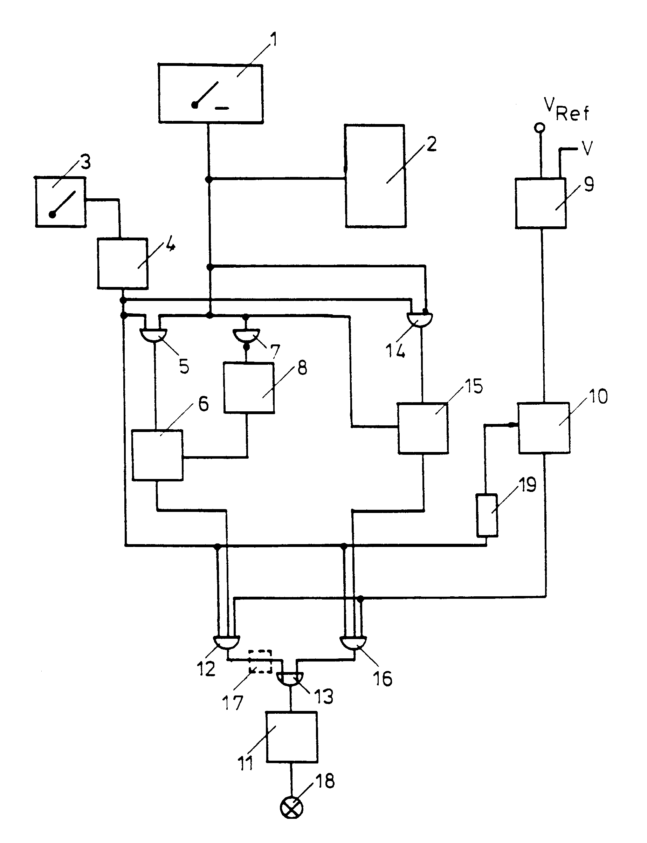

Anhand des Ausführungsbeispiels der Zeichnung wir die Erfindung näher erläutert.

Dort ist mit 1 ein Bremslichtschalter eines Fahrzeugs bezeichnet, und mit 2 ein Steuergerät eines im Fahrzeug vorhandenen Reglers.

Durch Betätigen eines Zündschalter 3 zu Fahrbeginn wird ein Signal erzeugt, das in einem Differenzierer 4 differenziert wird. Der dabei entstehende Impuls macht ein Und-Gatter 5 kurzzeitig durchlässig, wenn ein Signal vom Bremslichtschalter ansteht, was nur der Fall ist, wenn der Fahrer bereits das Bremspedal betätigt oder ein Kurzschluß gegen Batteriespannung vorliegt oder der Bremslichtschalter klebt. Das Ausgangssignal des Und-Gatters 5 setzt einen nichtflüchtigen Fehlerspeicher 6. In gleicher Weise wird über ein Und-Gatter 14 mit invertiertem Eingang ein nichtflüchtiger Fehlerspeicher 15 gesetzt, wenn bei Auftreten des Impulses am Ausgang des Differenzierers 4 der Bremslichtshalter 1 kein Signal abgibt, was der Fall ist, wenn der Fahrer nicht die Bremse betätigt aber auch wenn ein Leitungsbruch vorliegt.

Wenn bei der anschließenden Fahrt das Signal des Bremslichtschalters 1 abfällt, so wird mit Hilfe eines Inverters 7 und eines Differenzierers 8 ein Impuls erzeugt, der den Speicher 6 rücksetzt. Umgekehrt wird der Speicher 15 rückgesetzt, wenn nach dem Setzen des Fehlerspeicher 15 ein Bremslichtschaltersignal durch Bremsen auftritt.

Zusätzlich ist ein Vergleicher 9 vorgesehen, in dem die Fahrzeuggeschwindigkeit bzw. die für die Schlupfmessung im Regler benötigte Referenzgeschwindigkeit mit einem vorgegebenen Geschwindigkeitswert verglichen wird. Wird dieser Geschwindigkeitswert überschritten, so wird ein eine Fahrt des Fahrzeugs anzeigender nichtflüchtiger Speicher 10 gesetzt.

Wurde einer der Fehlerspeicher 6 oder 15 gesetzt und bei der Fahrt nicht rückgesetzt, aber der Fahrspeicher 10 gesetzt, so wird bei der nächsten Betätigung des Zündschalters 3 über eines de Und-Gatter 12 und 16 und das Oder-Gatter 13 eine Fehleranzeige 11 gesetzt. Diese ist hier als Speicher ausgebildet, sodaß das Auftreten eines Signals an einem der Und-Gatter 12 und 16 gespeichert bleibt. Das Ausgangssignal dieses Speichers kann eine Warnlampe 18 ansteuern. Der Speicher 10 wird durch das Signal des Zündschalters 3 über ein Zeitglied 19 etwas verzögert gelöscht.

Handelt es sich bei dem betrachteten Fahrzeug um ein Fahrzeug mit Automatikgetriebe, so ist es sinnvoll erst nach mehrmaligen Setzen des Fehlerspeichers 6 die Fehleranzeige zu setzen. Hierzu kann man an den Ausgang des Und-Gatters 12 einen Zähler 17 anschalten, der z.B. erst nach dreimaligen Setzen des Speichers 6 die Fehleranzeige 11 setzt.

### Patentansprüche

1. Anordnung zur Überwachung der Funktion des Bremslichtschalters (1) eines Fahrzeugs und-/oder der Signalleitung zwischen Bremslichtschalter (1) und einem Steuergerät (2) eines Reglers, der das Bremslichtschaltersignal auswertet, insbesondere eines Antiblockierreglers, eines Antriebsschlupfreglers und/oder eines Motorschleppmomentreglers denen die Stellung des Bremslichtschalters (1) als Hilfsgröße zugeführt wird, dadurch gekennzeichnet, daß bei Zündbetätigung (in 3) geprüft wird (durch 4, 5), ob das Bremslichtschaltersignal vorhanden ist, daß bei Vorhandensein dieses Bremslichtschaltersignal ein Fehlerspeicher (6) gesetzt wird, daß bei Verschwinden dieses Bremslichtschaltersignals der Fehlerspeicher (6) gelöscht wird (durch 7, 8), daß während der Fahrt bei Überschreiten einer vorgegebenen Geschwindigkeit (9) ein Fahrtsignalspeicher (10) gesetzt wird und daß bei einer nachfolgenden Zündbetätigung (in 3) eine Fehleranzeige (11) getätigt wird (über 12, 13), wenn beide Speicher (6 und 10) gesetzt sind.

2. Anordnung zur Überwachung der Funktion des Bremslichtschalters (1) eines Fahrzeugs und-/oder der Signalleitung zwischen Bremslichtschalter (1) und einem Steuergerät (2) eines Reglers, der das Bremslichtschaltersignal auswertet insbesondere eines Antiblockierreglers, eines Antriebsschlupfreglers und/oder eines Motorschleppmomentreglers denen die Stellung des Bremslichtschalters (1) als Hilfsgröße zugeführt wird, insbesondere nach Anspruch 1, dadurch gekennzeichnet, daß bei Zündbetätigung (3) geprüft wird (durch 4, 14), ob das Bremslichtschaltersignal vorhanden ist, daß bei fehlendem Bremslichtschaltersignal ein Fehlerspeicher (15) gesetzt wird, daß der Speicher (15) bei Auftreten des Bremslichtschaltersignals gelöscht wird, daß während der Fahrt bei Überschreiten einer vorgegebenen Geschwindigkeit (Vergleicher 9) ein Fahrtsignalspeicher (10) gesetzt wird und daß bei einer nachfolgenden Zündbetätigung (in 3) eine Fehleranzeige (in 11) getätigt wird (über 16, 13) wenn beide Speicher (15, 10) gesetzt sind.

3. Anordnung nach Anspruch 1 oder 2, dadurch gekennzeichnet, daß sie in das Steuergerät (2) integriert ist.

4. Anordnung nach Anspruch 2 oder 3, dadurch gekennzeichnet, daß die Fehleranzeige (in 11) erst getätigt wird (über 17, 13), wenn das die Fehleranzeige (in 11) ansteuernde Signal mehrfach aufgetreten ist (Häufigkeitszähler 17).

**Claims**

1. Arrangement for monitoring the operation of the brake light switch (1) of a vehicle and/or of the signal line between the brake light switch (1) and a control unit (2) of a regulator which evaluates the brake light switch signal, especially of an anti-lock braking system regulator, of a drive slip regulator and/or of a motor traction torque regulator to which the position of the brake light switch (1) is supplied as an auxiliary variable, characterised in that, when the ignition is operated (at 3) a test is carried out (by 4, 5) to determine whether the brake light switch signal is present, in that, if this brake light switch signal is present, a fault memory (6) is set, in that, if this brake light switch signal disappears, the fault memory (6) is deleted (by 7, 8), in that, when driving, if a predetermined speed (9) is exceeded, a driving signal memory (10) is set, and in that, in the case of a subsequent operation of the ignition (at 3), a fault indicator (11) is activated (via 12, 13) when both memories (6 and 10) are set.

2. Arrangement for monitoring the operation of the brake light switch (1) of a vehicle and/or of the signal line between the brake light switch (1) and a control unit (2) of a regulator which evaluates the brake light switch signal, especially of an anti-lock braking system regulator, of a drive slip regulator and/or a motor traction torque regulator to which the position of the brake light switch (1) is supplied as an auxiliary variable, especially according to Claim 1, characterised in that, in the case of the ignition (3) being operated, a test is carried out (by 4, 14) to determine whether the brake light switch signal is present, in that, if the brake light switch signal is absent, a fault memory (15) is set, in that the memory (15) is deleted when the brake light switch signal occurs, in that a driving signal memory (10) is set when driving when a predetermined speed (comparator 9) is exceeded, and in that in the case of subsequent operation of the ignition (at 3), a fault indicator (in 11) is activated (via 16, 13) when both memories (15, 10) are set.

3. Arrangement according to Claim 1 or 2, characterised in that said arrangement is integrated into the control unit (2).

4. Arrangement according to Claim 2 or 3, characterised in that the fault indicator (in 11) is not activated (via 17, 13) until the signal driving the fault indicator (in 11) has occurred a number of times (frequency counter 17).

**Revendications**

1. Dispositif de surveillance du fonctionnement du contacteur d'allumage du feu de freinage (1) d'un véhicule et/ou de la liaison électrique entre le contacteur (1) et un appareil de commande (2) d'un régulateur qui exploite le signal du contacteur (1), en particulier un régulateur anti-blocage, un régulateur anti-patinage et/ou un régulateur du couple de remorquage d'un moteur dont la position du contacteur (1) est utilisée comme grandeur auxiliaire, caractérisé en ce que, à l'établissement du contact du moteur (en 3), on contrôle (par 4, 5) si le signal du contacteur d'allumage de feu de freinage (1) est présent, que dans ce cas un accumulateur d'erreurs (6) est activé, qu'à la disparition de ce signal l'accumulateur d'erreurs (6) n'est plus alimenté (par 7, 8), que pendant la marche du véhicule, le dépassement d'une vitesse donnée (9), active un accumulateur de signaux de marche (10) et qu'une action alternante sur le contact (en 3) active un indicateur de défaut (11 par 12, 13), si les deux accumulateurs (6 et 10) sont activés.

2. Dispositif de surveillance du fonctionnement du contacteur d'allumage du feu de freinage (1) d'un véhicule et/ou de la liaison électrique entre le contacteur (1) et un appareil de commande (2) d'un régulateur qui exploite le signal du contacteur (1) en particulier un régulateur anti-blocage, un régulateur anti-patinage et/ou un régulateur de couple de remorquage d'un moteur dont la position du contacteur (1) est utilisée comme paramètre auxiliaire, en particulier selon la revendication 1, caractérisé en ce qu'à l'établissement du contact du moteur (3) la présence du signal du contacteur (1) est contrôlée par (4, 14), qu'à l'absence de ce signal un accumulateur d'erreurs (15) est mis en service, puis coupé lorsque se produit le signal du contacteur (1), que pendant la marche du véhicule, le dépassement d'une vitesse donnée (comparateur 9) met en service un accumulateur de signaux de marche et qu'une action ultérieure sur le contact du moteur (en 3) active un indicateur de défaut (en 11, par 16, 13) si les deux accumulateurs (15, 10)sont en service.

3. Dispositif de surveillance selon la revendication 1 ou 2, caractérisé en ce qu'il est intégré à l'appareil de commande (2).

4. Dispositif de surveillance selon la revendication 2 ou 3, caractérisé en ce que l'indicateur de défaut (en 11 par 17, 13) n'est activée que si le signal commandant cet indicateur a été émis plusieurs fois (compteur de fréquence (répétition) 17).